# EUROPÄISCHE PATENTSCHRIFT

(11) **EP 4 244 517 B1**
(45) Veröffentlichungstag und Bekanntmachung des Hinweises auf die Patenterteilung: **17.09.2025**
(21) Anmeldenummer: 21815122.3
(22) Anmeldetag: 11.11.2021
(51) Int. Cl.: F16L 37/05, F16L 33/03, F16L 33/207

(54) **FLUIDVERBINDUNGSEINHEIT**
FLUID CONNECTION UNIT
UNITÉ DE CONNEXION DE FLUIDE

(30) Priorität: 16.11.2020 DE 102020130213
(43) Veröffentlichungstag der Anmeldung: 20.09.2023
(73) Patentinhaber: Fränkische Industrial Pipes GmbH & Co. KG, 97486 Königsberg (DE)
(72) Erfinder: SCHRÖTER, Dirk, 97176 Pfarrweisach (DE); KRAUSS, Manfred, 97265 Hettstadt (DE); SCHRÖTER, Sören, 96103 Hallstadt (DE)
(74) Vertreter: Weickmann & Weickmann PartmbB
(86) Internationale Anmeldenummer: PCT/EP2021/081355
(87) Internationale Veröffentlichungsnummer: WO 2022/101330

(56) Entgegenhaltungen:
- WO-A1-2021/185419
- GB-A- 2 032 030
- IT-A1- MI20 121 068
- US-A1- 2016 369 922
- US-A1- 2020 248 846

## Beschreibung

Die vorliegende Erfindung betrifft eine Fluidverbindungseinheit zum Verbinden einer Fluidleitung mit einem Fluidleitungsanschluss. Beispielsweise im Motorraum von Fahrzeugen werden diverse Komponenten miteinander unter Verwendung von Fluidleitungen aus Gummi verbunden. Derartige Gummileitungen können jedoch den Nachteil aufweisen, dass sie gegenüber äußeren Einflüssen, beispielsweise mechanischen Belastungen, nicht besonders widerstandsfähig sind. Um ein Knicken der Fluidleitungen aus Gummi zu verhindern, ist es oftmals auch notwendig, die Fluidleitungen gemäß ihrem speziellen vorbestimmten Einsatzzweck in einem bereits vorgeformten Zustand herzustellen, das heißt Krümmungen der Fluidleitung schon bei der Herstellung auszubilden. Dadurch wird die Einsatzmöglichkeit einer bestimmten Fluidleitung aus Gummi jedoch stark begrenzt und es ist notwendig, für jeden speziellen Einsatzzweck eine daraufhin angepasste Fluidleitung in Verbindung mit einem zugehörigen Spezialwerkzeug herzustellen.

Aus dem Dokument GB 2 032 030 A, welches als nächstliegender Stand der Technik erachtet wird, ist eine Fluidverbindungseinheit mit einer Einsatzelement bekannt, welches einen Vorsprung mit einer Sperrflanke aufweist, welche dazu eingerichtet ist, in einem mit dem Aufnahmeabschnitt eingegriffenen Zustand des Einsatzelements, gegen einen Sperrvorsprung anzuliegen, welcher an dem Grundkörper ausgebildet ist. Ferner sei auf die Dokumente US 2016/369922 A1, IT MI20 121 068 A1, US 2020/248846 A1 und WO 2021/185419 A1 hingewiesen, wobei letztgenanntes unter Artikel 54(3) EPÜ zu betrachten ist.

Es ist daher die Aufgabe der vorliegenden Erfindung, eine Fluidverbindungseinheit zum Verbinden einer Fluidleitung mit einem Fluidleitungsanschluss bereitzustellen, welche es auch ermöglicht, ein Wellrohr mit einem bestehenden Fluidleitungsanschluss zu verbinden.

Diese Aufgabe wird gemäß der vorliegenden Erfindung durch eine Fluidverbindungseinheit gemäß Anspruch 1 gelöst.

Es sei bereits an dieser Stelle darauf hingewiesen, dass das "eine axiale Ende" des Grundkörpers und das "andere axiale Ende" des Grundkörpers zwei freie Enden der Fluidverbindungseinheit darstellen, welche nicht zwangsläufig auf einer Achse liegen müssen.

An dem Anschlussstutzen des Grundkörpers kann eine als ein Wellrohr ausgebildete Fluidleitung angeschlossen werden, wobei das Wellrohr nicht ausschließlich aus einer Abfolge von Wellentälern und Wellenbergen bestehen muss, sondern auch glatte Abschnitte, das heißt Abschnitte, welche über einen vorbestimmten Bereich eine im Wesentlichen zylindrische Form aufweisen, und/oder Abschnitte mit ansteigendem oder abnehmendem Durchmesser umfassen kann.

Vorteilhafterweise kann das Einsatzelement wenigstens zwei, insbesondere wenigstens vier, nach radial außen vorstehende Vorsprünge aufweisen. Eine Mehrzahl von Vorsprüngen kann den Vorteil aufweisen, dass zwischen den jeweiligen Vorsprüngen, in einer Umfangsrichtung relativ zu einer Achse betrachtet, welche durch die axiale zentrale Anschlussöffnung definiert ist, Abschnitte des Grundkörpers angeordnet sein können, so dass durch einen Eingriff zwischen den Vorsprüngen des Einsatzelements und des Grundkörpers eine rotatorische Sicherung des Einsatzelements relativ zu dem Grundkörper hergestellt werden kann.

Die erfindungsgemäße Fluidverbindungseinheit ermöglicht somit, an bestehende Komponenten, welche mit einem entsprechenden Fluidleitungsanschluss versehen sind, welcher für eine Verbindung einer Gummi-Fluidleitung eingerichtet ist, auch Fluidleitungen anschließen zu können, welche beispielsweise als aus Kunststoff hergestellte Wellrohre ausgebildet sind. Die Verwendung von Wellrohren als Fluidleitungen kann es ermöglichen, kostengünstige und in ihrer Haupterstreckungsrichtung gerade ausgebildete Wellrohre herzustellen und die Fluidleitungen erst bei ihrer jeweiligen Verwendung entsprechend ihres Einsatzzwecks mit Krümmungen zu versehen, das heißt in einen gewünschten Verlauf der Fluidleitung zu formen.

Durch den zweiteiligen Aufbau des Einsatzelements und des Grundkörpers ist es möglich, einen gleichen Grundkörper wahlweise mit verschiedenen Einsatzelementen zu verbinden, welche sich beispielsweise in einer Ausbildung der axialen zentralen Anschlussöffnung (zum Beispiel unterschiedlichen Durchmessern) unterscheiden, so dass die erfindungsgemäße Fluidverbindungseinheit zur Verbindung mit unterschiedlich ausgestalteten Fluidleitungsanschlüssen eingerichtet werden kann. Dadurch, dass gleich ausgebildete Komponenten der erfindungsgemäßen Fluidverbindungseinheit für verschiedene Fluidleitungsanschlüsse verwendet werden können, können die Herstellkosten der erfindungsgemäßen Fluidverbindungseinheit signifikant gesenkt werden. Natürlich ist es ebenfalls denkbar, dass zu einem bestimmten Einsatzelement verschiedene Grundkörper passen, wie beispielsweise Grundkörper, welche sich durch die Ausbildung und/oder Ausrichtung des Anschlussstutzens, das heißt einen Winkel, welcher zwischen dem Anschlussstutzen und dem restlichen Grundkörper gebildet ist, unterscheiden.

Gemäß der vorliegenden Erfindung umfasst die Fluidverbindungseinheit ferner ein Klemmelement, welches dazu eingerichtet ist, mit dem Aufnahmeabschnitt einzugreifen und, in einem mit dem Aufnahmeabschnitt eingegriffenen Zustand, derart eine Kraft auf den wenigsten einen Vorsprung auszuüben, dass eine die axiale zentrale Anschlussöffnung des Einsatzelements definierende Innenwandung nach radial innen vorbelastet wird. Das Klemmelement kann im Wesentlichen ringförmig und aus einem elastischen Material, insbesondere einem Federstahl, ausgebildet sein. Durch die Verwendung des Klemmelements kann eine Verbindung der Fluidverbindungseinheit mit dem Fluidleitungsanschluss verstärkt werden, so dass diese Verbindung höheren Auszugskräften widerstehen kann, welche beispielsweise aufgrund eines hohen Fluiddrucks des in der Fluidleitung geführten Fluids ausgeübt werden.

Auch hier ist es möglich, dass ein Grundkörper bzw. Einsatzelement mit unterschiedlichen Klemmelementen verbindbar sein kann, welche sich zum Beispiel durch ihre Stärke und/oder ihr Material (Metall, Kunststoff etc.) unterscheiden. Aus diese Weise können unterschiedliche Klemmkräfte und Haltekräfte zwischen Einsatzelement und Fluidleitungsanschluss erreicht werden.

Hierbei ist es sowohl denkbar, dass der wenigstens eine Vorsprung des Einsatzelements derart nach radial außen vorsteht, dass er mit dem Klemmelement in Kontakt treten kann, welches zumindest an seiner Innenseite im Wesentlichen glatt ausgebildet ist, als auch, dass das Klemmelement nach radial innen vorstehende Vorsprünge aufweist, welche derart nach radial innen ragen, dass sie das Einsatzelement, in einem mit dem Aufnahmeabschnitt verbundenen Zustand des Einsatzelements, kontaktieren können.

Dabei kann der Grundkörper ferner einen weiteren Aufnahmeabschnitt aufweisen, welcher dazu eingerichtet ist, von dem Klemmelement in einer anfänglichen Stellung davon eingegriffen zu werden. Das heißt, die erfindungsgemäße Fluidverbindungseinheit kann in ihrem Auslieferungszustand das Klemmelement mit dem weiteren Aufnahmeabschnitt verbunden aufweisen. Nach einer Verbindung der Fluidverbindungseinheit mit dem entsprechenden Fluidleitungsanschluss kann das Klemmelement einfach von dem weiteren Aufnahmeabschnitt zu dem Aufnahmeabschnitt verlagert werden, um dort mit dem wenigstens einen Vorsprung des Einsatzelements in Kontakt zu treten.

Vorteilhafterweise kann die Fluidverbindungseinheit ferner einen Codeabschnitt umfassen, welcher einen Code enthält, wobei der Code dazu geeignet ist, eine Fluidverbindungseinheit zu identifizieren, wobei der Codeabschnitt insbesondere einen für eine jeweilige Fluidverbindungseinheit einzigartigen Code enthält und vorteilhafterweise ein maschinenlesbarer Code, insbesondere ein DMC und/oder ein RFID-Element, ist. So kann zu Zwecken einer Qualitätssicherung jede Fluidverbindungseinheit erfasst und deren Verwendung dokumentiert werden.

Insbesondere kann es sich hierbei anbieten, dass der Codeabschnitt im Bereich des weiteren Aufnahmeabschnitts derart angeordnet ist, dass der Code, in dem mit dem weiteren Aufnahmeabschnitt eingegriffenen Zustand des Klemmelements, von dem Klemmelement radial außen überlagert wird. Auf diese Weise kann das Klemmelement in dem Auslieferungszustand der Fluidverbindungseinheit bzw. in dem noch nicht mit dem Fluidleitungsanschluss vollständig verbundenen Zustand der Fluidverbindungseinheit ein Auslesen des Codeabschnitts verhindern, wodurch vermieden werden kann, dass eine Fluidverbindungseinheit als montiert dokumentiert werden kann, obwohl die entsprechende Verbindung noch nicht korrekt hergestellt worden ist. Im Falle eines optisch auslesbaren Codeabschnitts kann das Klemmelement das Auslesen dadurch verhindern, dass es aus einem nicht-transparenten Material, wie beispielsweise einem Metall, ausgebildet ist. Im Falle eines elektromagnetisch auslesbaren Codeabschnitts kann das Klemmelement das Auslesen dadurch verhindern, dass es aus einem abschirmenden Material, wie beispielsweise einem Metall, ausgebildet ist.

Der Codeabschnitt kann von dem Grundkörper gesondert ausgebildet und mit dem Grundkörper verbindbar sein, insbesondere unter Verwendung eines Klebens, eines Bedruckens und/oder eines Formschlusses, wie einem Verrasten. Es sei darauf hingewiesen, dass die "gesonderte Ausbildung" des Codeabschnitts nicht auf eine Ausbildung als gesondertes Bauteil beschränkt ist, sondern, wie voranstehend bereits erwähnt, auch durch ein Bedrucken der Fluidverbindungseinheit mit einem entsprechenden Code realisiert werden kann.

Um zu verhindern, dass sich das Klemmelement unbeabsichtigt von dem weiteren Aufnahmeabschnitt löst und dadurch zum Beispiel den Codeabschnitt freigibt, kann zwischen dem Aufnahmeabschnitt und dem weiteren Aufnahmeabschnitt ein Haltevorsprung angeordnet sein, welcher von dem Grundkörper nach radial außen derart vorsteht, dass das Klemmelement daran gehindert wird, aus einem Eingriff mit dem weiteren Aufnahmeabschnitt in Richtung eines Eingriffs mit dem Aufnahmeabschnitt verlagert zu werden, ohne den Durchmesser des Klemmelements zu verändern. Um das Klemmelement auch in der entgegengesetzten Richtung, das heißt einer Richtung von dem Aufnahmeabschnitt weg, zu sichern, kann der Grundkörper auch hier wenigstens einen nach radial außen vorstehenden Abschnitt aufweisen, zum Beispiel einen Anstieg des Außendurchmessers des Grundkörpers.

Insbesondere kann der Sperrvorsprung mit dem restlichen Grundkörper über Stege verbunden sein, wobei eine minimale radiale Erstreckung der Stege geringer ist als eine minimale radiale Erstreckung des restlichen Sperrvorsprungs. In anderen Worten definieren die radial inneren Seiten der Stege einen kleineren Innendurchmesser als eine radial innere Fläche des Sperrvorsprungs. Beispielsweise kann der Sperrvorsprung im Wesentlichen ringförmig ausgebildet sein und die Stege können sich von einer radial inneren Fläche des ringförmigen Sperrvorsprungs in einer axialen Richtung über den Aufnahmeabschnitt hinweg in Richtung des weiteren Aufnahmeabschnitts, insbesondere bis zu dem Haltevorsprung, erstrecken.

In dem Fall, dass das Einsatzelement derart ausgebildet ist, dass es an seiner Außenseite mit den radial inneren Flächen der Stege, in dem mit dem Grundkörper verbundenen Zustand des Einsatzelements, in Kontakt steht, kann sich, in einer Umfangsrichtung der Fluidverbindungseinheit betrachtet, zwischen zwei benachbarten Stegen ein bogenförmiger Spalt ergeben. Wird die Fluidverbindungseinheit nun auf einen Fluidleitungsanschluss aufgeschoben, so kann das elastische Material des Einsatzelements in einen jeweiligen bogenförmigen Spalt ausweichen. Dies vereinfacht das Aufschieben der Fluidverbindungseinheit insbesondere in dem Fall, in welchem der Fluidleitungsanschluss an seiner Außenseite nicht durchgängig zylindrisch ausgebildet ist.

Ferner kann eine Innenwandung der axialen zentralen Anschlussöffnung des Einsatzelements eine Mehrzahl von Ausnehmungen aufweisen, welche von einem nominalen Durchmesser der axialen zentralen Anschlussöffnung nach radial außen ausgenommen sind und welche sich in einer axialen Richtung relativ zu der Anschlussöffnung zumindest abschnittsweise entlang der Innenwandung der axialen zentralen Anschlussöffnung des Einsatzelements erstrecken. Diese Ausnehmungen, welche auch als Rillen bezeichnet werden können, können eine Reibungsfläche zwischen Einsatzelement und dem Fluidleitungsanschluss reduzieren, so dass ein Aufschieben der erfindungsgemäßen Fluidverbindungseinheit auf einen jeweiligen Fluidleitungsanschluss erleichtert werden kann.

Dabei kann einem jeweiligen Steg des Grundkörpers derart eine jeweilige Ausnehmung der Anschlussöffnung des Einsatzelements zugeordnet sein, dass ein Steg und eine Ausnehmung, in einer radialen Richtung betrachtet, einander überlappend ausgerichtet sind. Auf diese Weise ist im Bereich einer Innenseite der Stege eine verringerte Wandstärke des Einsatzelements, das heißt eine jeweilige Ausnehmung, angeordnet, so dass eine benötigte Kraft, welche für eine korrekte Verbindung der erfindungsgemäßen Fluidverbindungseinheit mit einem jeweiligen Fluidleitungsanschluss erforderlich ist, weiter reduziert werden kann.

Die Mehrzahl von Ausnehmungen können sich von dem axialen Ende des Einsatzelements, welches dem Sperrvorsprung des Grundkörpers zugeordnet ist, entlang der Innenwandung der axialen zentralen Anschlussöffnung des Einsatzelements bis maximal zu einer Stelle erstrecken, welche in einer radialen Richtung gerade noch von dem wenigstens einen Vorsprung überlagert ist. Insbesondere können die Ausnehmungen der Innenwandung des Einsatzelements derart enden, dass zumindest ein Abschnitt des wenigstens einen Vorsprungs des Einsatzelements, in einer radialen Richtung betrachtet, einen Abschnitt der Innenwandung des Einsatzelements überlappt, welcher im Wesentlichen zylindrisch ausgebildet ist, das heißt über einen gesamten Umlauf in Umfangsrichtung frei von den Ausnehmungen der Innenwandung (Rillen) ist. Dies kann gewährleisten, dass das Einsatzelement, gegebenenfalls in Zusammenwirkung mit dem Klemmelement, einen abdichtenden Eingriff mit dem Fluidleitungsanschluss herstellen kann.

Vorteilhafterweise kann die Innenwandung der axialen zentralen Anschlussöffnung des Einsatzelements eine in Umfangsrichtung umlaufende Nut aufweisen. Diese Nut kann zum Beispiel als Gegenform zu einer sogenannten "Olive" ausgebildet sein. Eine solche "Olive" ist ein umlaufender Vorsprung, welcher in dem Bereich eines freien Endes eines Fluidleitungsanschlusses an dessen Außenseite ausgebildet ist.

Diese Nut kann von der Mehrzahl von Ausnehmungen beabstandet sein. Das heißt, die Ausnehmungen der Innenwandung des Einsatzelements erstrecken sich nicht bis zu der Nut, so dass ein großflächiger Kontakt der Nut mit dem entsprechenden Abschnitt des Fluidleitungsanschlusses (zum Beispiel der "Olive") hergestellt werden kann.

Der Nut benachbart, insbesondere in einem Bereich zwischen der Nut und dem Ende der Ausnehmungen kann wenigstens eine Dichtungslippe angeordnet sein, welche in Umfangsrichtung umlaufend von der Innenwandung des Einsatzelements nach radial innen, vorteilhafterweise schräg, vorsteht.

Die Fluidverbindungseinheit kann ferner eine Hülseneinheit umfassen, welche dazu eingerichtet ist, radial außerhalb des Anschlussstutzens angeordnet zu werden und eine Verbindung des Anschlussstutzens mit der Fluidleitung zu sichern. Dabei kann die Hülseneinheit dadurch, dass ihr Durchmesser verringert wird, zum Beispiel durch Schrumpfen oder durch Pressen, einen Eingriff der Fluidleitung mit dem Anschlussstutzen verstärken und sichern.

In einer vorteilhaften Ausführungsform kann der wenigstens eine Vorsprung des Einsatzelements im Bereich des Aufnahmeabschnitts weiter nach radial außen vorstehen als der Grundkörper. Das heißt, die Stege, welche den Sperrvorsprung mit dem restlichen Grundkörper verbinden, ragen hier, betrachtet man den Aufnahmeabschnitt in seiner Umfangsrichtung, weniger weit nach radial außen als die Vorsprünge des Einsatzelements. Wie bereits weiter oben erwähnt, kann somit eine Innenseite des Klemmelements im Wesentlichen glatt ausgebildet sein.

Ferner können an den Vorsprüngen des Einsatzelements Druckklammern bereitgestellt sein, wobei insbesondere jeweils einem Vorsprung eine Druckklammer zugeordnet sein kann. Vorzugsweise überlappt eine Druckklammer jeweils einen Vorsprung radial außen vollständig. Eine Druckklammer kann einen Basisabschnitt, welcher sich in axialer Richtung des Einsatzelements und entlang der Umfangsrichtung des Einsatzelements erstreckt, und zwei Seitenabschnitte aufweisen, wobei sich die Seitenabschnitte in axialer Richtung des Einsatzelements und im Wesentlichen radial nach innen erstrecken. Die Druckklammern können somit insbesondere U-förmig ausgebildet sein. Ein jeweiliger Seitenabschnitt kann insbesondere mit einem Hinterschnitt eines Vorsprungs, beispielsweise mit im Wesentlichen radial nach innen verlaufenden Flanken des Vorsprungs, eingreifen. Dabei kann eine Druckklammer einen jeweiligen Vorsprung zumindest teilweise oder sogar vollständig umschließen. Alternativ oder zusätzlich können die Druckklammern mit den Vorsprüngen verklebt sein.

Die Druckklammern können beispielsweise nach der Montage des Einsatzelements an dem Grundkörper und vor dem Einführen eines Fluidanschlusses in das Einsatzelement an den Vorsprüngen angebracht werden. Durch die Anbringung der Druckklammern kann insbesondere der Außendurchmesser des Einsatzelements der Fluidverbindungseinheit bzw. der Vorsprünge davon vergrößert werden, wodurch das Klemmelement eine erhöhte Anpresskraft auf den Fluidanschluss im Inneren des Einsatzelements ausüben kann. Dafür kann es vorteilhaft sein, dass die Druckklammern aus einem in Bezug auf das Material des Einsatzelements steiferen Material hergestellt sind, beispielsweise Polyamid 6 oder Polypropylen oder Metall. Ferner kann durch die Anbringung der steiferen Druckklammern verhindert werden, dass das Klemmelement im Zuge einer elastischen Verformung des Einsatzelements die Stege des Grundkörpers kontaktiert und Kraft auf diese überträgt. Somit kann die Rückstellkraft des Klemmelements im Wesentlichen vollständig als Anpresskraft auf den Fluidanschluss verwendet werden.

Ebenso ist es denkbar, anstelle der Verwendung der Druckklammern das Einsatzelement in einem Mehrkomponentenspritzgussverfahren derart herzustellen, dass insbesondere ein jeweiliger Vorsprung des Einsatzelements einen Abschnitt weicheren Materials und einen Abschnitt steiferen Materials aufweisen kann. Beispielsweise kann ein Vorsprung radial außen ein steiferes Material und radial innen ein weicheres Material umfassen.

Die vorliegende Erfindung wird im Folgenden anhand eines Ausführungsbeispiels mit Bezug auf die begleitenden Zeichnungen in größerem Detail beschrieben werden. Es stellt dar:
- Figur 1: eine Explosionsansicht einer ersten Ausführungsform einer erfindungsgemäßen Fluidverbindungseinheit;
- Figur 2: eine perspektivische Ansicht der ersten Ausführungsform der Fluidverbindungseinheit gemäß Figur 1 in einem zusammengebauten Zustand;
- Figur 3: eine Seitenquerschnittsansicht der ersten Ausführungsform der Fluidverbindungseinheit;
- Figur 4: eine Seitenansicht einer zweiten Ausführungsform einer erfindungsgemäßen Fluidverbindungseinheit;
- Figur 5: eine Querschnittsansicht der zweiten Ausführungsform der erfindungsgemäßen Fluidverbindungseinheit gemäß der Schnittlinie V-V aus Figur 4; und
- Figur 6: eine Querschnittsansicht einer dritten Ausführungsform einer erfindungsgemäßen Fluidverbindungseinheit gemäß der Schnittlinie VI-VI aus Figur 4.

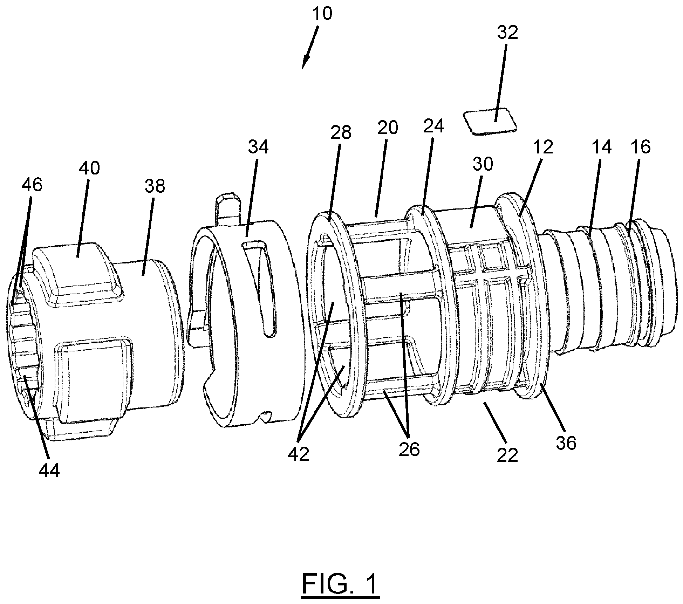

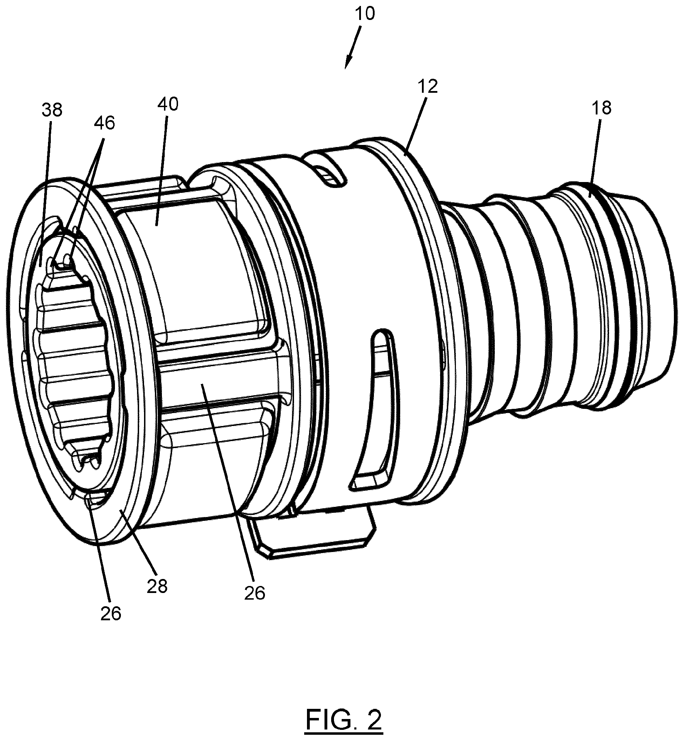

In Figur 1 ist eine erfindungsgemäße Fluidverbindungseinheit allgemein mit dem Bezugszeichen 10 bezeichnet. Die Fluidverbindungseinheit 10 umfasst einen Grundkörper 12, welcher an seinem in Figur 1 rechts dargestellten Ende einen Anschlussstutzen 14 umfasst, um den Grundkörper 12 mit einer (in Figur 1 nicht dargestellten) Fluidleitung zu verbinden. An dem Anschlussstutzen 14 ist eine Aufnahmenut 16 angeordnet, welche dazu eingerichtet ist, ein Dichtungselement 18 (siehe Figur 2) zur Abdichtung gegenüber der Fluidleitung aufzunehmen.

Der Grundkörper 12 umfasst einen Aufnahmeabschnitt 20 und einen weiteren Aufnahmeabschnitt 22, zwischen welchen ein Haltevorsprung 24 angeordnet ist, dessen Erstreckung nach radial außen größer ist als die des Aufnahmeabschnitts 20 bzw. des weiteren Aufnahmeabschnitts 22. In dem Aufnahmeabschnitt 20 sind in der hier dargestellten Ausführungsform vier Stege 26 angeordnet, welche den Haltevorsprung 24 mit einem Sperrvorsprung 28 verbinden. Dabei ist zu erkennen, dass die Stege 26 an einer radial inneren Fläche des im Wesentlichen ringförmig ausgebildeten Sperrvorsprungs 28 mit diesem verbunden sind, das heißt weiter nach radial innen vorstehen als der Sperrvorsprung 28.

Im Bereich des weiteren Aufnahmeabschnitts 22 ist eine Aufnahmefläche 30 vorgesehen, welche dazu eingerichtet ist, mit einem Codeabschnitt 32 verbunden zu werden. An dem Codeabschnitt 32 ist ein Code angeordnet, welcher zum Beispiel unter Verwendung eines elektronischen Lesegeräts erfasst werden kann.

Die Fluidverbindungseinheit 10 umfasst in der dargestellten Ausführungsform ferner ein Klemmelement 34, welches hier als eine ringförmige federnde Klammer ausgebildet ist. Das Klemmelement 34 kann in einem Auslieferungszustand der erfindungsgemäßen Fluidverbindungseinheit 10 mit dem weiteren Aufnahmeabschnitt verbunden werden und dort durch den Haltevorsprung 24 und eine Vergrößerung des Außendurchmessers 36 des Grundkörpers 12 an Ort und Stelle gehalten werden. In dieser Position kann das Klemmelement 34 den Codeabschnitt 32 derart abdecken/abschirmen, dass dieser nicht ausgelesen werden kann.

Des Weiteren umfasst die erfindungsgemäße Fluidverbindungseinheit 10 ein Einsatzelement 38, welches aus einem elastischen Material, nämlich aus Gummi, hergestellt ist. Das Einsatzelement 38 weist an seinem Außenumfang Vorsprünge 40 auf, welche nach radial außen vorstehen und welche derart bemessen sind, dass sie in Durchbrechungen 42 eingreifen können, welche in dem Aufnahmeabschnitt 20 des Grundkörpers 12 zwischen jeweils benachbarten Stegen 26 ausgebildet sind.

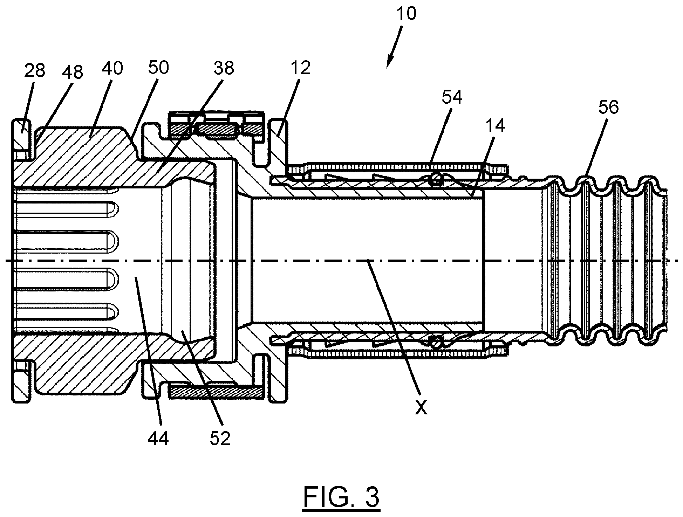

Das Einsatzelement 38 weist eine axiale zentrale Anschlussöffnung 44 auf, welche dazu eingerichtet ist, einen Fluidanschluss aufzunehmen. An einer Innenwandung des Einsatzelements 38, welche die axiale zentrale Anschlussöffnung 44 definiert, sind in Umfangsrichtung verteilt eine Mehrzahl von Ausnehmungen 46 angeordnet, welche von einem nominalen Durchmesser der axialen zentralen Anschlussöffnung 44 nach radial außen ausgenommen sind und welche sich rillenartig von dem in Figur 1 links dargestellten Ende des Einsatzelements 38 in einer axialen Richtung erstrecken, das heißt einer im Wesentlichen parallelen Richtung zu einer durch die axiale zentrale Anschlussöffnung 44 definierten Achse X (siehe Figur 3).

Wie in Figur 2 zu erkennen ist, ist das Einsatzelement 38 durch den Eingriff der Vorsprünge 40 mit den Stegen 26 des Grundkörpers 12 derart relativ zu dem Grundkörper 12 rotatorisch gesichert und ausgerichtet, dass einem jeweiligen Steg 26 radial innen eine Ausnehmung 46 zugeordnet ist.

Wird die Fluidverbindungseinheit 10 auf einen entsprechenden Fluidleitungsanschluss aufgeschoben, kann das elastische Material des Einsatzelements 38, insbesondere beim Verlagern über eine sogenannte "Olive" des Fluidleitungsanschlusses, in einen bogenförmigen Freiraum ausweichen, welcher an einer Innenseite des Sperrvorsprungs 28 zwischen zwei jeweiligen benachbarten Stegen 26 freigelassen ist.

In Figur 3 ist ferner zu erkennen, dass die Vorsprünge 40 des Einsatzelements 38 an einer dem Sperrvorsprung 28 zugewandten Seite eine Sperrflanke 48 aufweisen, welche, insbesondere in dem mit einem jeweiligen Fluidleitungsanschluss verbundenen Zustand der Fluidverbindungseinheit 10, durch einen Kontakt mit dem Sperrvorsprung 28 ein Lösen des Einsatzelements 38 von dem Grundkörper 12 verhindern. An einer dem Sperrvorsprung 28 entgegengesetzten Seite weisen die Vorsprünge 40 des Einsatzelements 38 Einführungsflanken 50 auf, welche ein Verbinden des Einsatzelements 38 mit dem Grundkörper 12 erleichtern.

Es ist in Figur 3 auch zu erkennen, dass die rillenartigen Ausnehmungen 46 noch in einem Bereich des Einsatzelements 38 enden, welcher in einer radialen Richtung von den Vorsprünge 40 überlagert ist.

An der Innenwandung der axialen zentralen Anschlussöffnung 44 des Einsatzelements 38 ist ferner eine Nut 52 angeordnet, welche dazu eingerichtet und ausgebildet ist, mit der "Olive" eines Fluidleitungsanschlusses einzugreifen.

Im Bereich des Anschlussstutzens 14 des Grundkörpers 12 ist radial außen eine Hülseneinheit 54 angeordnet, welche, zum Beispiel durch Verpressen, eine Verbindung des Anschlussstutzens 14 mit der Fluidleitung 56 sichern kann.

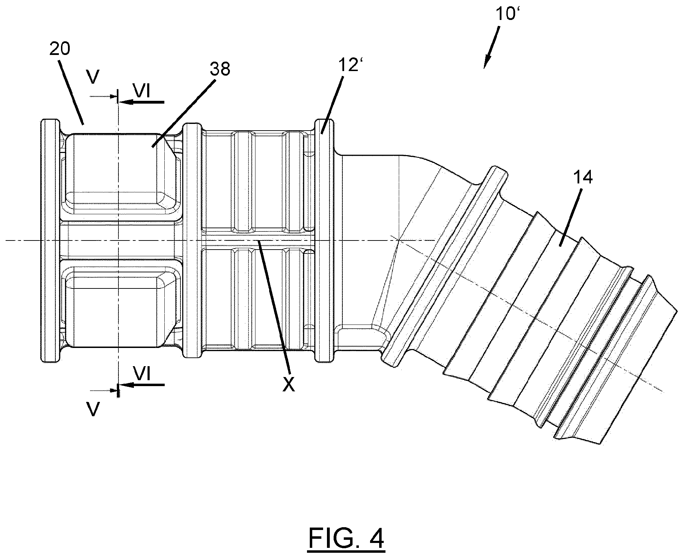

In Figur 4 ist eine zweite Ausführungsform 10' einer erfindungsgemäßen Fluidverbindungseinheit dargestellt, welche sich von der ersten Ausführungsform 10 lediglich dahingehend unterscheidet, dass der Anschlussstutzen 14 des Grundkörpers 12' an diesem unter Ausbildung eines Winkels angeordnet ist. Im Übrigen sei explizit darauf verwiesen, dass sämtliche Merkmale, Effekte und Vorteile der ersten Ausführungsform 10 auch auf die zweite Ausführungsform 10' anwendbar sein können, und umgekehrt.

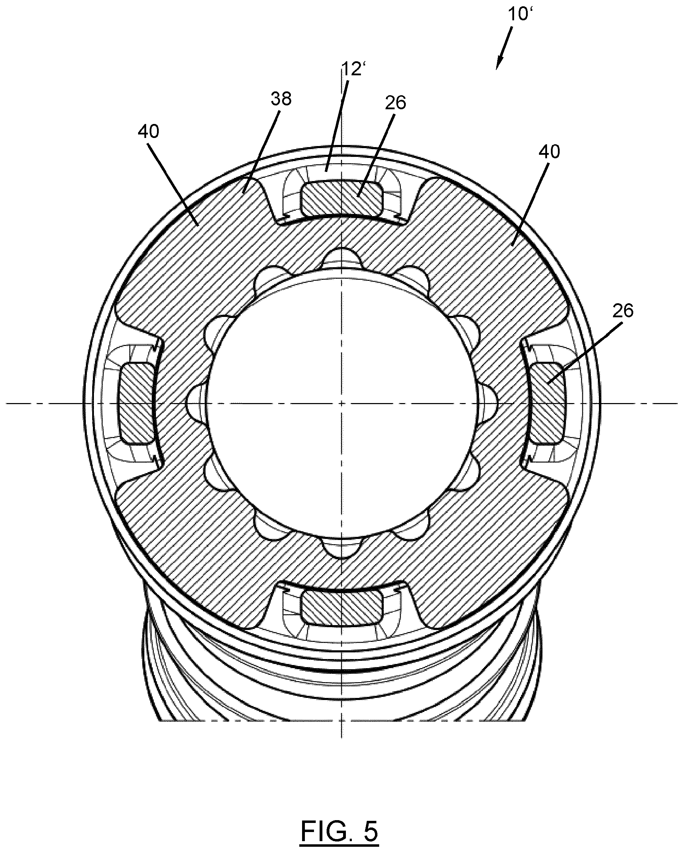

Wie in Figur 4 durch die Linie V-V angedeutet, ist in Figur 5 eine Schnittansicht durch den Aufnahmeabschnitt 20 inklusive des damit verbundenen Einsatzelements 38 dargestellt. In Figur 5 ist klar zu erkennen, dass die Vorsprünge 40 des Einsatzelements 38 weiter nach radial außen vorstehen, als eine maximale radiale Erstreckung der Stege 26 des Grundkörpers 12 bzw. 12'.

Wird das Klemmelement 34 mit dem Aufnahmeabschnitt 20 verbunden, nachdem die Fluidverbindungseinheit 10 bzw. 10' vollständig mit einem jeweiligen Fluidleitungsanschluss verbunden worden ist, so übt die federnde Rückstellkraft des Klemmelements 34 eine Kraft auf die Vorsprünge 40 des Einsatzelements 38 derart aus, dass das elastische Material des Einsatzelements 38 nach radial innen gedrängt und auf den Fluidleitungsanschluss gepresst wird.

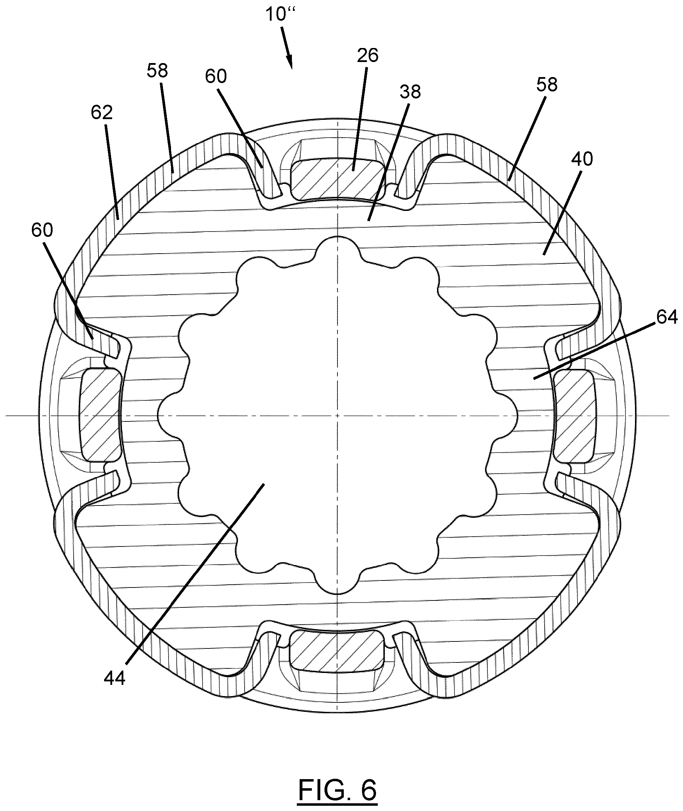

Ferner ist in Figur 6 eine dritte Ausführungsform 10" einer erfindungsgemäßen Fluidverbindungseinheit in einer Querschnittsansicht veranschaulicht. Analog zu der in Figur 5 gezeigten Schnittansicht der zweiten Ausführungsform 10' verläuft der in Figur 6 dargestellte Querschnitt entlang derselben Schnittlinie aus Figur 4. Die Blickrichtung verläuft in Figur 6 jedoch entgegengesetzt zu der Blickrichtung aus Figur 5, nämlich in Richtung der Anschlussöffnung 44 des Einsatzelements 38. Die dritte Ausführungsform 10" der erfindungsgemäßen Fluidverbindungseinheit unterscheidet sich von der ersten Ausführungsform 10 und der zweiten Ausführungsform 10' lediglich dahingehend, dass an den Vorsprüngen 40 des Einsatzelements 38 Druckklammern 58 bereitgestellt sind. Insbesondere ist hier jedem Vorsprung 40 eine Druckklammer 58 zugeordnet. Im Übrigen sei explizit darauf verwiesen, dass sämtliche Merkmale, Effekte und Vorteile der ersten Ausführungsform 10 und/oder und der zweiten Ausführungsform 10' auch auf die dritte Ausführungsform 10" anwendbar sein können, und umgekehrt.

Ein jeweiliger Vorsprung 40 wird radial außen vorzugsweise vollständig von einer Druckklammer 58 überlappt. Des Weiteren weisen die Druckklammern 58 jeweils zwei sich radial nach innen erstreckende Seitenabschnitte 60 auf, welche dazu eingerichtet sind, ein Lösen der Druckklammer 58 von einem jeweiligen Vorsprung 40 zu verhindern. Dabei können die Druckklammern 58 in dem in Figur 6 dargestellten Zustand eine Klemmkraft erzeugen, aufgrund welcher die Druckklammern 58 fest an den Vorsprüngen 40 gehaltert sein können. Alternativ oder zusätzlich können die Druckklammern 58 mit den Vorsprüngen 40 verklebt sein. Die Druckklammern 58 können im Wesentlichen U-förmig ausgebildet sein, wobei ein jeweiliger Basisabschnitt 62 einer Druckklammer 58 in Umfangsrichtung verläuft und die beiden Seitenabschnitte 60 einer Druckklammer 58, als Schenkel der U-Form, zu dem Basisabschnitt 62 im Wesentlichen rechtwinklig, insbesondere nach radial innen verlaufend, angeordnet sind. Die freien Enden der zwei Seitenabschnitte 60 einer Druckklammer 58 weisen insbesondere in Umfangsrichtung einen geringeren Abstand zueinander auf als die in Umfangsrichtung betrachtet maximale Erstreckung eines jeweiligen Vorsprungs 40.

Durch die Anbringung der Druckklammern 58 weist die Ausführungsform 10" der Fluidverbindungseinheit im Vergleich zu den Ausführungsformen 10 und 10' im Bereich des Einsatzelements 38 einen erhöhten Außendurchmesser auf. Die Druckklammern 58 können insbesondere aus einem in Bezug auf das Material des Einsatzelements 38 steiferen Kunststoff hergestellt sein, vorzugsweise Polyamid 6 oder Polypropylen. Befindet sich die Fluidverbindungseinheit 10" nun in einem mit einem Fluidanschluss verbundenen Zustand, so übt die federnde Rückstellkraft des Klemmelements 34 (in Figur 6 nicht dargestellt) eine Kraft auf die Druckklammern 58 aus, wobei diese Kraft von den Druckklammern 58 auf die Vorsprünge 40 übertragen wird. Aufgrund des im Bereich des Einsatzelements 38 erhöhten Außendurchmessers kann das elastische Material des Einsatzelements 38 über das Klemmelement 34 weiter nach radial innen gedrängt werden und eine erhöhte Anpresskraft auf den Fluidanschluss erzeugt werden.

Ferner kann über die Auslegung der radialen Erstreckung der Seitenabschnitte 60 einer Druckklammer 58 ein Abstand zwischen einem jeweiligen freien Ende eines Seitenabschnitts 60 zu einem Zwischenbereich 64 des Einsatzelements 38 eingestellt werden. Hierdurch kann definiert werden, nach welcher Verlagerung einer Druckklammer 58 nach radial innen diese an dem Zwischenbereich 64 des Einsatzelements 38 anschlägt, das heißt mit diesem in Kontakt tritt, wobei daraufhin die Rückstellkraft des Klemmelements 34 sowohl über den Basisabschnitt 62 als auch über die Seitenabschnitte 60 der Druckklammer 58 auf das Einsatzelement 38 übertragen werden kann. Des Weiteren kann die U-förmige Anordnung der Druckklammern 58 die Verformung des elastischen Materials des Einsatzelements 38 in Umfangsrichtung reduzieren. Insgesamt kann auf diese Weise verhindert werden, dass das Klemmelement 34 im Zuge der elastischen Verformung des Einsatzelements 38 die Stege 26 kontaktiert und Kraft auf diese anstatt auf das Einsatzelement 38 überträgt.

Die Anbringung der Druckklammern 58 an den Vorsprüngen 40 kann erfolgen, indem die Seitenabschnitte 60, welche in Bezug auf den Basisabschnitt 62 anfänglich weniger stark gebogen sein können, erst nach dem Kontaktieren eines Vorsprungs 40 durch eine jeweilige Druckklammer 58 in den in Figur 6 dargestellten Zustand überführt werden, wobei ein jeweiliger Seitenabschnitt 60 in Richtung eines Hinterschnitts eines Vorsprungs 40 gebogen werden kann. Alternativ können die Druckklammern 58 in einem U-förmigen Zustand hergestellt werden und anschließend auf die Vorsprünge 40 gepresst werden, wobei hierbei eine höhere Elastizität des Materials des Einsatzelements 38 im Vergleich zu dem Material der Druckklammern 58 vorteilhaft sein kann.

An dieser Stelle sei erwähnt, dass anstelle einer nachträglichen Anbringung der Druckklammern 58 an den Vorsprüngen 40 ebenso eine Herstellung des Einsatzelements 38 in einem Mehrkomponentenspritzgussverfahren denkbar ist, wobei insbesondere ein Vorsprung 40 einen Abschnitt weicheren Materials und einen Abschnitt steiferen Materials aufweisen kann. Beispielsweise weist ein jeweiliger Vorsprung 40 radial außen ein steiferes Material und radial innen ein weicheres Material auf.

## Patentansprüche

1. Fluidverbindungseinheit (10, 10', 10") zum Verbinden einer Fluidleitung (56) mit einem Fluidleitungsanschluss einer übergeordneten, nicht zu der Erfindung gehörenden, Baugruppe, umfassend
einen Grundkörper (12, 12'), welcher an einem axialen Ende einen Anschlussstutzen (14) zur Verbindung mit der Fluidleitung (56) aufweist, und welcher an dem anderen axialen Ende einen Aufnahmeabschnitt (20) aufweist,
ein Einsatzelement (38), welches ein aus Gummi bestehendes elastisches Material umfasst, wenigstens einen nach radial außen vorstehenden Vorsprung (40) aufweist und in seinem Inneren eine axiale zentrale Anschlussöffnung (44) definiert, wobei das Einsatzelement (38) von dem Grundkörper (12, 12') getrennt hergestellt ist und mit dem Grundkörper (12, 12') derart verbindbar ist, dass der wenigstens eine Vorsprung (40) in eine jeweilige entsprechende Durchbrechung (42), welche in dem Bereich des Aufnahmeabschnitts (20) gebildet ist, hinein ragt, und wobei der wenigstens eine Vorsprung (40) eine Sperrflanke (48) aufweist, welche sich zusammen mit dem zugehörigen Vorsprung (40) in einer im Wesentlichen radialen Richtung nach außen erstreckt und zu dem axialen Ende des Grundkörpers (12, 12') weist, welches dem Anschlussstutzen (14) entgegengesetzt ist, wobei die Sperrflanke (48) dazu eingerichtet ist, in einem mit dem Aufnahmeabschnitt (20) eingegriffenen Zustand des Einsatzelements (38), gegen einen Sperrvorsprung (28) anzuliegen, welcher an dem Grundkörper (12, 12') ausgebildet ist,
**dadurch gekennzeichnet, dass** die Fluidverbindungseinheit (10, 10', 10") ferner ein Klemmelement (34) umfasst, welches dazu eingerichtet ist, mit dem Aufnahmeabschnitt (20) einzugreifen und, in einem mit dem Aufnahmeabschnitt (20) eingegriffenen Zustand, derart eine Kraft auf den wenigsten einen Vorsprung (40) auszuüben, dass eine die axiale zentrale Anschlussöffnung (44) des Einsatzelements (38) definierende Innenwandung nach radial innen vorbelastet wird.

2. Fluidverbindungseinheit (10, 10', 10") nach Anspruch 1,
**dadurch gekennzeichnet, dass** der Grundkörper (12, 12') ferner einen weiteren Aufnahmeabschnitt (22) aufweist, welcher dazu eingerichtet ist, von dem Klemmelement (34) in einer anfänglichen Stellung davon eingegriffen zu werden.

3. Fluidverbindungseinheit (10, 10', 10") nach einem der vorhergehenden Ansprüche,
**dadurch gekennzeichnet, dass** die Fluidverbindungseinheit (10, 10', 10") ferner einen Codeabschnitt (32) umfasst, welcher einen Code enthält, wobei der Code dazu geeignet ist, eine Fluidverbindungseinheit (10, 10', 10") zu identifizieren, wobei der Codeabschnitt (32) insbesondere einen für eine jeweilige Fluidverbindungseinheit (10, 10', 10") einzigartigen Code enthält und vorteilhafterweise ein maschinenlesbarer Code, insbesondere ein DMC und/oder ein RFID-Element, ist.

4. Fluidverbindungseinheit (10, 10', 10") nach den vorhergehenden Ansprüchen 2 und 3,
**dadurch gekennzeichnet, dass** der Codeabschnitt (32) im Bereich des weiteren Aufnahmeabschnitts (22) derart angeordnet ist, dass der Code, in dem mit dem weiteren Aufnahmeabschnitt (22) eingegriffenen Zustand des Klemmelements (34), von dem Klemmelement (34) radial außen überlagert wird.

5. Fluidverbindungseinheit (10, 10', 10") nach einem der vorhergehenden Ansprüche 3 oder 4,
**dadurch gekennzeichnet, dass** der Codeabschnitt (32) von dem Grundkörper (12, 12') gesondert ausgebildet und mit dem Grundkörper (12, 12') verbindbar ist, insbesondere unter Verwendung eines Klebens, eines Bedruckens und/oder eines Formschlusses, wie einem Verrasten.

6. Fluidverbindungseinheit (10, 10', 10") nach einem der vorhergehenden Ansprüche, soweit abhängig von Anspruch 2
**dadurch gekennzeichnet, dass** zwischen dem Aufnahmeabschnitt (20) und dem weiteren Aufnahmeabschnitt (22) ein Haltevorsprung (24) angeordnet ist, welcher von dem Grundkörper (12, 12') nach radial außen derart vorsteht, dass das Klemmelement (34) daran gehindert wird, aus einem Eingriff mit dem weiteren Aufnahmeabschnitt (22) in Richtung eines Eingriffs mit dem Aufnahmeabschnitt (20) verlagert zu werden, ohne den Durchmesser des Klemmelements (34) zu verändern.

7. Fluidverbindungseinheit (10, 10', 10") nach einem der vorhergehenden Ansprüche,
**dadurch gekennzeichnet, dass** der Sperrvorsprung (28) mit dem restlichen Grundkörper (12, 12') über Stege (26) verbunden ist, wobei eine minimale radiale Erstreckung der Stege (26) geringer ist als eine minimale radiale Erstreckung des restlichen Sperrvorsprungs (28).

8. Fluidverbindungseinheit (10, 10', 10") nach einem der vorhergehenden Ansprüche,
**dadurch gekennzeichnet, dass** eine Innenwandung der axialen zentralen Anschlussöffnung (44) des Einsatzelements (38) eine Mehrzahl von Ausnehmungen (46) aufweist, welche von einem nominalen Durchmesser der axialen zentralen Anschlussöffnung (44) nach radial außen ausgenommen sind und welche sich in einer axialen Richtung relativ zu der Anschlussöffnung (44) zumindest abschnittsweise entlang der Innenwandung der axialen zentralen Anschlussöffnung (44) des Einsatzelements (38) erstrecken.

9. Fluidverbindungseinheit (10, 10', 10") nach den vorhergehenden Ansprüchen 7 und 8,
**dadurch gekennzeichnet, dass** einem jeweiligen Steg (26) des Grundkörpers (12, 12') derart eine jeweilige Ausnehmung (46) der Anschlussöffnung (44) des Einsatzelements (38) zugeordnet ist, dass ein Steg (26) und eine Ausnehmung (46), in einer radialen Richtung betrachtet, einander überlappend ausgerichtet sind.

10. Fluidverbindungseinheit (10, 10', 10") nach Anspruch 8 oder 9,
**dadurch gekennzeichnet, dass** sich die Mehrzahl von Ausnehmungen (46) von dem axialen Ende des Einsatzelements (38), welches dem Sperrvorsprung (28) des Grundkörpers (12, 12') zugeordnet ist, entlang der Innenwandung der axialen zentralen Anschlussöffnung (44) des Einsatzelements (38) bis maximal zu einer Stelle erstrecken, welche in einer radialen Richtung gerade noch von dem wenigstens einen Vorsprung (40) überlagert ist.

11. Fluidverbindungseinheit (10, 10', 10") nach einem der vorhergehenden Ansprüche,
**dadurch gekennzeichnet, dass** die Innenwandung der axialen zentralen Anschlussöffnung (44) des Einsatzelements (38) eine in Umfangsrichtung umlaufende Nut (52) aufweist.

12. Fluidverbindungseinheit (10, 10', 10") nach Anspruch 11 und einem der vorhergehenden Ansprüche 8 bis 10,
**dadurch gekennzeichnet, dass** die Nut (52) von der Mehrzahl von Ausnehmungen (46) beabstandet ist.

13. Fluidverbindungseinheit (10, 10', 10") nach einem der vorhergehenden Ansprüche,
**dadurch gekennzeichnet, dass** die Fluidverbindungseinheit (10, 10', 10") ferner eine Hülseneinheit (54) umfasst, welche dazu eingerichtet ist, radial außerhalb des Anschlussstutzens (14) angeordnet zu werden und eine Verbindung des Anschlussstutzens (14) mit der Fluidleitung (56) zu sichern.

14. Fluidverbindungseinheit (10, 10', 10") nach einem der vorhergehenden Ansprüche,
**dadurch gekennzeichnet, dass** der wenigstens eine Vorsprung (40) des Einsatzelements (38) im Bereich des Aufnahmeabschnitts (20) weiter nach radial außen vorsteht als der Grundkörper (12, 12').

## Claims

1. Fluid connection unit (10, 10', 10") for connecting a fluid line (56) to a fluid line connection of a higher-level assembly not belonging to the invention, comprising
a base body (12, 12') which has a connection piece (14) at one axial end for connection to the fluid line (56) and which has a receiving section (20) at the other axial end,
an insert element (38) comprising an elastic material consisting of rubber, having at least one projection (40) projecting radially outwards and defining an axial central connection opening (44) in its interior, wherein the insert element (38) is manufactured separately from the base body (12, 12') and can be connected to the base body (12, 12') in such a way that the at least one projection (40) projects into a respective corresponding opening (42) formed in the region of the receiving section (20), and wherein the at least one projection (40) has a blocking flank (48) which, together with the associated projection (40), extends in a substantially radial direction outwards and faces the axial end of the base body (12, 12') which is opposite the connection piece (14), wherein the blocking flank (48) is designed, in a state in which the insert element (38) is engaged with the receiving section (20), to bear against a blocking projection (28) which is formed on the base body (12, 12').
**characterised in that** the fluid connection unit (10, 10', 10") further comprises a clamping element (34) which is designed to engage with the receiving section (20) and, to exert force on the at least one projection (40) in a state of engagement with the receiving section (20) in such a way that an inner wall defining the axial central connection opening (44) of the insert element (38) is preloaded radially inwards.

2. Fluid connection unit (10, 10', 10") according to claim 1,
**characterised in that** the base body (12, 12') further comprises a further receiving section (22) which is designed to be engaged by the clamping element (34) in an initial position thereof.

3. Fluid connection unit (10, 10', 10") according to any one of the preceding claims,
**characterised in that** the fluid connection unit (10, 10', 10') further comprises a code section (32) containing a code, wherein the code is suitable for identifying a fluid connection unit (10, 10', 10'), wherein the code section (32) in particular contains a code that is unique for a respective fluid connection unit (10, 10', 10') and is advantageously a machine-readable code, in particular a DMC and/or an RFID element.

4. Fluid connection unit (10, 10', 10") according to any of the preceding claims 2 or 3,
**characterised in that** the code section (32) is arranged in the region of the further receiving section (22) in such a way that, when the clamping element (34) is engaged with the further receiving section (22), the code is radially superimposed on the clamping element (34) on the outside.

5. Fluid connection unit (10, 10', 10") according to any of the preceding claims 3 or 4,
**characterised in that** the code section (32) is formed separately from the base body (12, 12') and can be connected to the base body (12, 12'), in particular by means of adhesive bonding, printing and/or a form-fitting connection, such as locking.

6. Fluid connection unit (10, 10', 10") according to any one of the preceding claims, insofar as dependent on claim 2
**characterised in that a retaining** projection (24) is arranged between the receiving section (20) and the further receiving section (22), which protrudes radially outwards from the base body (12, 12') in such a way that the clamping element (34) is prevented from being displaced out of engagement with the further receiving section (22) in the direction of engagement with the receiving section (20) without changing the diameter of the clamping element (34).

7. Fluid connection unit (10, 10', 10") according to any one of the preceding claims,
**characterised in that** the locking projection (28) is connected to the remaining base body (12, 12') via bridges (26), wherein a minimum radial extension of the bridges (26) is less than a minimum radial extension of the remaining locking projection (28).

8. Fluid connection unit (10, 10', 10") according to any one of the preceding claims,
**characterised in that** an inner wall of the axial central connection opening (44) of the insert element (38) has a plurality of recesses (46) which are recessed radially outwardly from a nominal diameter of the axial central connection opening (44) and which extend in an axial direction relative to the connection opening (44) at least in sections along the inner wall of the axial central connection opening (44) of the insert element (38).

9. Fluid connection unit (10, 10', 10") according to any of the preceding claims 7 or 8,
**characterised in that** a respective recess (46) of the connection opening (44) of the insert element (38) is assigned to a respective bridge (26) of the base body (12, 12') in such a way that a bridge (26) and a recess (46), viewed in a radial direction, are aligned so as to overlap each other.

10. Fluid connection unit (10, 10', 10") according to claim 8 or 9,
**characterised in that** the majority of recesses (46) extend from the axial end of the insert element (38) which is assigned to the locking projection (28) of the base body (12, 12'), extend along the inner wall of the axial central connection opening (44) of the insert element (38) to a maximum point, which in a radial direction, is just superimposed by the at least one projection (40).

11. Fluid connection unit (10, 10', 10") according to any one of the preceding claims,
**characterised in that** the inner wall of the axial central connection opening (44) of the insert element (38) has a groove (52) running in the circumferential direction.

12. Fluid connection unit (10, 10', 10") according to claim 11 or any of the preceding claims 8 to 10,
**characterised in that** the groove (52) is spaced apart from the plurality of recesses (46).

13. Fluid connection unit (10, 10', 10") according to any one of the preceding claims,
**characterised in that** the fluid connection unit (10, 10', 10") further comprises a sleeve unit (54) which is designed to be arranged radially outside the connection piece (14) and to secure a connection between the connection piece (14) and the fluid line (56).

14. Fluid connection unit (10, 10', 10") according to any one of the preceding claims,
**characterised in that** the at least one projection (40) of the insert element (38) in the region of the receiving section (20) projects further radially outwards than the base body (12, 12').

## Revendications

1. Unité de connexion fluidique (10, 10', 10") pour la connexion d'une conduite de fluide (56) à un raccord de conduite de fluide d'un ensemble supérieur qui ne fait pas partie de l'invention, comprenant :
un corps de base (12, 12') qui présente, à une extrémité axiale, une tubulure de raccordement (14) pour la connexion à la conduite de fluide (56) et qui présente, à l'autre extrémité axiale, une portion de réception (20),
un élément d'insertion (38) qui comprend un matériau élastique constitué en caoutchouc, qui présente au moins une saillie (40) faisant saillie radialement vers l'extérieur et qui définit, à l'intérieur, une ouverture de raccordement centrale axiale (44),
dans laquelle
l'élément d'insertion (38) est fabriqué séparément du corps de base (12, 12') et peut être relié au corps de base (12, 12') de telle sorte que ladite au moins une saillie (40) pénètre dans une traversée correspondante (42) respective ménagée au niveau de la portion de réception (20), et ladite au moins une saillie (40) présente un flanc de blocage (48) qui, conjointement avec la saillie associée (40), s'étend vers l'extérieur dans une direction sensiblement radiale et est dirigé vers l'extrémité axiale du corps de base (12, 12') opposée à la tubulure de raccordement (14), le flanc de blocage (48) est conçu pour s'appuyer contre une saillie de blocage (28) formée sur le corps de base (12, 12'), lorsque l'élément d'insertion (38) est en prise avec la portion de réception (20),
**caractérisée en ce que**
l'unité de connexion fluidique (10, 10', 10") comprend en outre un élément de serrage (34) conçu pour venir en prise avec la portion de réception (20) et, lorsqu'il est en prise avec la portion de réception (20), pour exercer une force sur ladite au moins une saillie (40), de telle sorte qu'une paroi intérieure, définissant l'ouverture de raccordement centrale axiale (44) de l'élément d'insertion (38), est précontrainte radialement vers l'intérieur.

2. Unité de connexion fluidique (10, 10', 10") selon la revendication 1, **caractérisée en ce que** le corps de base (12, 12') comprend en outre une autre portion de réception (22) conçue pour venir en prise avec l'élément de serrage (34), dans sa position initiale.

3. Unité de connexion fluidique (10, 10', 10") selon l'une des revendications précédentes,
**caractérisée en ce que** l'unité de connexion fluidique (10, 10', 10") comprend en outre une portion de code (32) présentant un code, le code étant approprié pour identifier une unité de connexion fluidique (10, 10', 10"), la portion de code (32) présentant en particulier un code univoque pour une unité de connexion fluidique (10, 10', 10") respective et étant avantageusement un code lisible par machine, en particulier un code DMC et/ou un élément RFID.

4. Unité de connexion fluidique (10, 10', 10") selon les revendications précédentes 2 et 3,
**caractérisée en ce que** la portion de code (32) est disposée au niveau de l'autre portion de réception (22) de telle sorte que le code, lorsque l'élément de serrage (34) est en prise avec l'autre portion de réception (22), est superposé radialement à l'extérieur par l'élément de serrage (34).

5. Unité de connexion fluidique (10, 10', 10") selon l'une des revendications précédentes 3 ou 4,
**caractérisée en ce que** la portion de code (32) est formée séparément du corps de base (12, 12') et peut être reliée au corps de base (12, 12'), en particulier par collage, par impression et/ou par complémentarité de forme, par exemple par encliquetage.

6. Unité de connexion fluidique (10, 10', 10") selon l'une des revendications précédentes prises en dépendance de la revendication 2, **caractérisée en ce qu'**une saillie de retenue (24) est disposée entre la portion de réception (20) et l'autre portion de réception (22), laquelle fait saillie du corps de base (12, 12') radialement vers l'extérieur, de telle sorte que l'élément de serrage (34) est empêché de se déplacer de sa position en prise avec l'autre portion de réception (22) vers une position en prise avec la portion de réception (20), sans pour autant modifier le diamètre de l'élément de serrage (34).

7. Unité de connexion fluidique (10, 10', 10") selon l'une des revendications précédentes,
**caractérisée en ce que** la saillie de blocage (28) est reliée au reste du corps de base (12, 12') par des entretoises (26), l'extension radiale minimale des entretoises (26) étant inférieure à l'extension radiale minimale du reste de la saillie de blocage (28).

8. Unité de connexion fluidique (10, 10', 10") selon l'une des revendications précédentes,
**caractérisée en ce qu'**une paroi intérieure de l'ouverture de raccordement centrale axiale (44) de l'élément d'insertion (38) présente une pluralité d'évidements (46) qui sont creusés radialement vers l'extérieur à partir du diamètre nominal de l'ouverture de raccordement centrale axiale (44) et qui s'étendent dans une direction axiale par rapport à l'ouverture de raccordement (44) au moins localement le long de la paroi intérieure de l'ouverture de raccordement centrale axiale (44) de l'élément d'insertion (38).

9. Unité de connexion fluidique (10, 10', 10") selon les revendications précédentes 7 et 8,
**caractérisée en ce qu'**un évidement respectif (46) de l'ouverture de raccordement (44) de l'élément d'insertion (38) est associé à une entretoise respective (26) du corps de base (12, 12'), de telle sorte qu'une entretoise (26) et un évidement (46) sont alignés en se chevauchant, vus dans une direction radiale.

10. Unité de connexion fluidique (10, 10', 10") selon la revendication 8 ou 9,
**caractérisée en ce que** la pluralité d'évidements (46) s'étendent depuis l'extrémité axiale de l'élément d'insertion (38), associée à la saillie de blocage (28) du corps de base (12, 12'), le long de la paroi intérieure de l'ouverture de raccordement centrale axiale (44) de l'élément d'insertion (38) au maximum jusqu'à un point qui, dans la direction radiale, est juste encore recouvert par ladite au moins une saillie (40).

11. Unité de connexion fluidique (10, 10', 10") selon l'une des revendications précédentes,
**caractérisée en ce que** la paroi intérieure de l'ouverture de raccordement centrale axiale (44) de l'élément d'insertion (38) présente une rainure (52) s'étendant circonférentiellement.

12. Unité de connexion fluidique (10, 10', 10") selon la revendication 11 et l'une des revendications précédentes 8 à 10,
**caractérisée en ce que** la rainure (52) est espacée de la pluralité d'évidements (46).

13. Unité de connexion fluidique (10, 10', 10") selon l'une des revendications précédentes,
**caractérisée en ce que** l'unité de connexion fluidique (10, 10', 10") comprend en outre un manchon (54) conçu pour être disposé radialement à l'extérieur de la tubulure de raccordement (14) et pour assurer la connexion de la tubulure de raccordement (14) à la conduite de fluide (56).

14. Unité de connexion fluidique (10, 10', 10") selon l'une des revendications précédentes,
**caractérisée en ce que**, au niveau de la portion de réception (20), ladite au moins une saillie (40) de l'élément d'insertion (38) fait saillie radialement vers l'extérieur plus loin que le corps de base (12, 12').
